# EUROPEAN PATENT APPLICATION

(11) **EP 1 855 098 A1**
(43) Date of publication of application: **14.11.2007**
(21) Application number: 06716844.3
(22) Date of filing: 20.01.2006
(51) Int. Cl.: G01N 1/28, G01N 1/36

(54) **SUBSTRATE FOR CARRYING METHOD FOR COMPREHENSIVELY ACTING WITH MATERIALS, METHOD FOR PRODUCING SAID SUBSTRATE, METHOD FOR PRODUCING A MATERIAL ON A SUBSTRATE AND A DEVICE FOR OPERATING THEREWITH**

(30) Priority: 21.01.2005 RU 2005101370
(71) Applicant: Givargizov, Mikhail Evgenievich, Moscow, 117133 (RU)
(72) Inventor: Givargizov, Mikhail Evgenievich, Moscow, 117133 (RU)
(74) Representative: Einsel, Martin
(86) International application number: PCT/RU2006/000014
(87) International publication number: WO 2006/078194

(57) **Abstract**

The invention relates to the structural design of a substrate for specimens, to a method for the production thereof and to a device based thereon. The inventive substrate structural design makes it possible to carry out a method for comprehensively investigating thin films consisting in forming a thin-film specimen on a specifically constructed specimen table, which enables to prepare such a specimen and to carry out subsequent operations for the investigation thereof. In particular for investigating a given specimen, said method makes it possible to use devices such as optical, atomic-force and optical near field microscopes, an analyser based on an X-rayogram obtainable by means of a synchrotron radiation, transmission and scanning (raster) electron microscopes, etc., thereby making it possible to identify the concrete investigated specimen areas while the transfer thereof from one device to another one

## Description

### FIELD OF THE INVENTION

Present invention relates to materials science, to precision instruments for science and technology, in particular to diagnostics of various materials presented as thin films. The proposed method of the complex action with the thin films consists in the preparation of the thin-film sample on a holder of special design that allows to prepare such the sample and implementation of further manipulation necessary for both study of the sample and using the materials for creation of various devices/equipments.

### Background of the Invention

Near-field scanning optical microscope (NSOM) is one of modern instruments for study of structures and properties of various thin films. The microscope represents a version of scanning probe devices (SPD). Among them, the atomic force microscope (AFM) is of highest importance.

In past, biological objects were studied mainly by optical microscopes (OM), as well as (to a lesser degree) by scanning electron microscopes (SEM), transmission electron microscopes (TEM) and, especially in recent years, by means of synchrotron radiation (SR). Nevertheless, in most laboratories, OM and AFM (as well as a small number of NSOM) remain principal instruments for these studies.

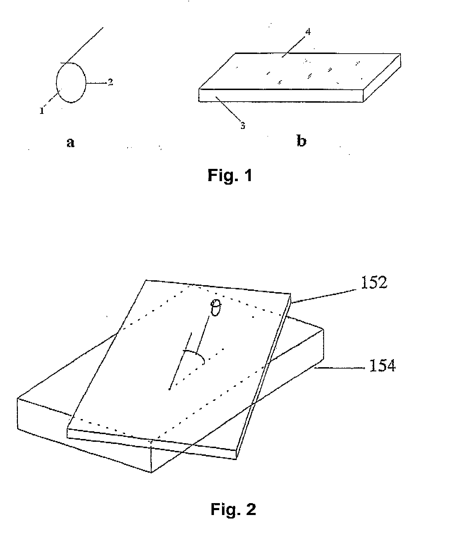

OM enables to observe an overall morphology and investigate the internal structure with resolution down to 500 nm and, in the regime of internal luminescence - down to 100 nm. AFM gives a resolution down to 3 nm in studies of the morphology. Typical resolution of NSOM is less than 100 nm, the device/instrument being non-perfect, and the number of studies implemented is still insignificant. SEM and TEM, being vacuum equipments, are little-suitable for studies of biological objects. SR equipments are few in number, preparation of samples for studies in SR equipment being imperfect: typically, it consists in stretching a thin film 1 on a ring 2, the film being kept on the ring by capillary forces, and dipping the ring into a solution that contains the material to be studied (Fig. 1a).

In OM a glass plate 3 with thickness ≥5 mm is commonly used (Fig. 1b). In working with NSOM such a substrate, being best of the available, introduces serious limitation in obtaining the picture of the internal structure of the sample 4 arranged on its surface with high resolution. However, it is difficult to use such a substrate in TEM.

A more specialized approach to realization of a complex study in materials research based on an analysis of thin films prepared from such materials is proposed in [1]. In this invention, a thin film 152 is used as a stage with a possibility of its angular shift in respect to the holder 154 (Fig. 2). Such a substrate, having additional freedom degrees, gives more possibilities for studies. This is achieved by the using the thin films as a stage. However, construction proposed in [1] is not universal neither in handling nor in production. And it intended for solving special tasks.

A method for studies of various (biological, semiconductor, oxide) materials is necessary for many tasks. The method must be, from one side, of complex nature and, from another side, simple and cheap. A large work is currently performed all over the world with proteins (DNA. viruses, etc). Their structure must be analyzed under various conditions and by various techniques. In other words, it is necessary to study both their morphology and internal structure with high resolution.

OM is available for most of users. It is a table device/instrument for each researcher. Most commonly, a combination of OM and AFM is used. A combination of NSOM with OM+AFM has been recently realized by only several developers. AsylumResearch company [2] supposes one of such an instrument. However, it is not still widely used instrument. In addition, the information obtained with him is insufficient for full study. Studies of the samples in TEM and by SR is not simple task.

A technique based on using a multi-purpose substrate (in text of the invention it will mean "MPS", and in claims it will mean "substrate") is proposed in this invention. This technique consists in complex actions with materials and their fragments, it allows to transfer the studies from "unique" to "routine" ones. This ensures a qualitative leap (via Increasing the number of publications) in biology and in various nanotechnological directions. The complex method of diagnostics of materials (especially of thin films) based on using the MPS as it is proposed by the current invention covers practically all the spectrum of existing instruments. It allows to start the mechanism of collective use of world park of scientific instruments independently on national or space belonging both the *objects* and the *instruments.* In addition, MPS allows to create materials with predetermined properties and to prepare perfect device/instrument practically in any spheres.

### DESCRIPTION OF THE INVENTION.

According to the present invention a substrate for realization of complex actions with materials and their fragments proposed. It includes at least one holder, at least one means for action with the fragments, at least one stage for the fragments, the stage represents a thin film on the holder, the film being implemented from at least one material as a membrane with two free surfaces, at least one of which being formed by removal of a part of the holder. The holder of such substrate can be implemented of semiconductor material, for example, from silicon. The film can be formed by a chemical joining of the material of the holder with another, at least one chemical element or by deposition on the substrate of the holder. According this invention the substrate can contains at least one means for formation of at least one fragment, and the means for formation being implemented with a possibility to remove at any stage and/or at least one means for maintenance the state of the fragment in initial status. Also the substrate can has the means for formation of at least one fragment that contains at least one relief element, and at least one means for maintenance of the state of at least one fragment in the initial status can represent at least one thin film of another fragment of this material and/or of fragment of another material. At least a part of such substrate can be removed at any stage of the action with the fragments, and at least a part of it can be transformed at any stage of the action with the fragments. This invention proposes the substrate which contains at least one means for placement and/or at least one means for positioning and/or at least one means for fixation in the holder of a device/instrument that contains at least one means for the action with fragments, with at least one of the mentioned means can be combined with another one. And the substrate can has at least one means for positioning of means of device/instrument that contains at least one means for the action with the fragments. Also the substrate can contains at least one electrode and/or at least one analytical means and/or at least one transforming means, and also the substrate can contains at least one means that ensures the possibility for placement it in/on transport container and/or in the holder of the device/instrument containing at least one means for the action with fragment. According to the invention the substrate give possibilities that at least one fragment of the material is formed on the substrate with the possibility to implement the complex actions with at least one more fragment of this material and/or with at least one fragment of other material, and the substrate can contains at least one means for controllable using the gravitation force and/or at least one controllable means for realization of an analog of the gravitation force with ensuring the possibility of directional forming at least one fragment of at least one material part of that contains a crystalline structure.

According to this invention a device for complex actions with materials is proposed that includes at least one means for an action with substrate, at least one means for an action with material fragments, contains a holder that allows to work with the substrate according to the the mentioned above points (items).

Also the invention proposes a method for preparation of the substrate that includes preparation of the holder, preparation of the stage that was made by formation on the holder of thin film implemented from at least one material with subsequent removal of a part of the holder for formation of at least of part of the film in the shape of a membrane with two free surfaces. This method includes possibilities when a composite wafer is used for the preparation of the substrate, the wafer contains at least two layers, one of them being massive. And method also includes possibilities when at least one stage of formation of the substrate and/or removal of its part is implemented after placing some material fragments on at least part of the stage.

### BRIEF DESCRIPTION OF FIGURES

- **Fig. 1a, b.**: Prior art. 1 - film of the material to be studied implemented as a membrane stretched on a wire ring; 2 - wire ring; 3 - glass substrate; 4 - thin film of the studied material.
- **Fig. 2.**: Prior art: a cross section of the substrate proposed by [1]; 152 - substrate of thin film; 154 - holder.
- **Fig. 3a,b - 15a,b.**: Two stereo metric views of MPS according to this invention:
**a -** front view,
**b -** side view; 1 - massive part (holder) of MPS, 2- thin film of the stage implemented as membrane, 2' - thin film of the stage on the surface of massive part (holder) of MPS, 3 and 7 - corbels of cruelty, 4 - cell-reservoir for placing the initial material, 5 - ditch
connecting the cell with the stage, 6 - additional layer of the massive part (holder) of MPS, 8 and 9- ditches formed in 1 and 6 layers for realization of possible detachment of one part of the holder from another part with the stage, 10 - connecting part of two parts of the holder.

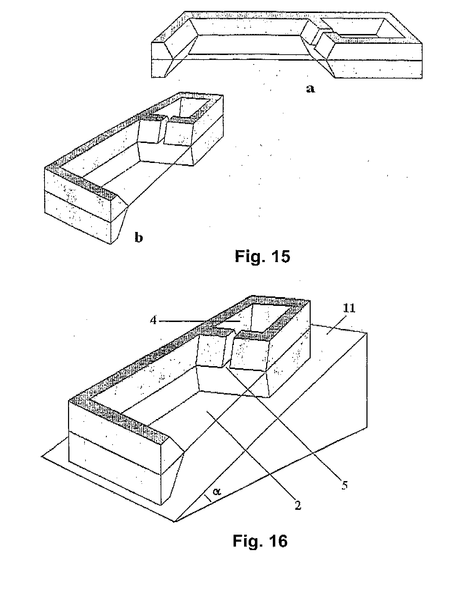

- **Fig. 16.**: Stereo metric view of MPS placed on the holder of the unit (device/instrument) with the changing angle α. 2 - thin film of the stage implemented as a membrane, 4 - cell-reservoir for placing the initial material, 5 - ditch connecting the cell with the stage, 11 - holder of the unit (device/instrument).

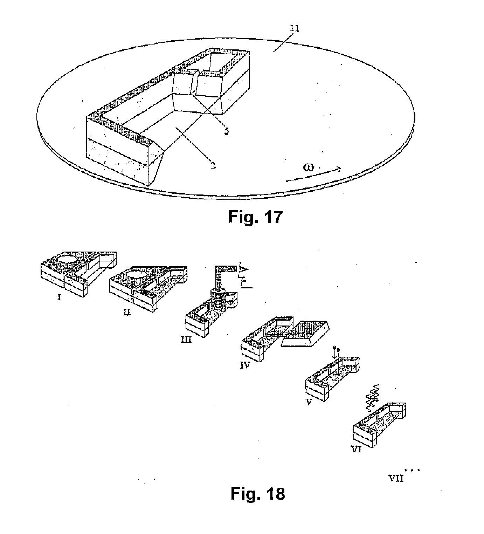

- **Fig. 17.**: Stereo metric view of MPS placed on the holder of the unit (device/instrument) that rotates with the angular velocity ω. 2 - thin film of the stage implemented as a membrane, 4 - cell-reservoir for placing the initial material, 5 - ditch connecting the cell with the stage, 11 - holder of the unit (device/instrument).
- **Fig. 18.**: Stereo metric view of MPS at various stages of user actions with it. I - MPS itself, II - formation (preparation) of thin-film fragment of the material, III - observation of the fragment in optical microscope, IV - study of the fragment by scanning probe device/instrument, V - study of the fragment by electron microscope (SEM and/or TEM), VI - study of the fragment by a device/instrument that uses some radiation of wave nature, VII - study of the fragment by any other device/instrument.

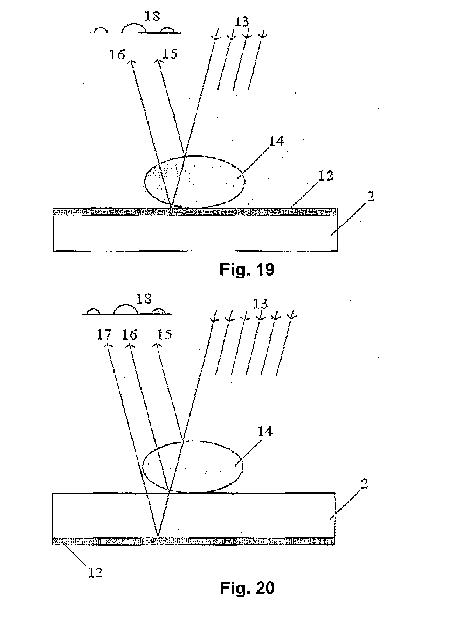

- **Fig. 19 and 20.**: Cross-section of the membrane with the fragment of the material. 12 - reflecting coating, 13 - radiation used for the study, 14 - fragment of the material, 15-radiation reflected from the sample. 16 - radiation reflected from face-side of the membrane, 17 - radiation reflected from back-side of the membrane, 18 - interference picture.

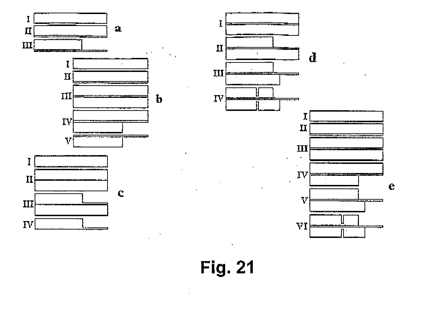

- **Fig. 21 a-e.**: Versions of preparation of MPS.

### EXAMPLES

In this invention, are proposed MPS constructions for realization of complex actions with materials or fragments (parts or samples) of materials (further in the text the terms "materials" and "fragments of materials" are considered as synonyms and can be termed as "fragments"). Such actions consist in creation (formation) of the fragments of the material as thin film, in an action to them by any known physical techniques, in analysis of consequences of such actions, in manipulation by fragments or their parts, in observation and study their properties and structure, using formed fragments to transform one kind of energy and/or kind of movement to another kind of energy and/or kind of movement as well as in use of already created on such MPS fragments of materials for realization of similar complex actions with other fragments or fragments of other materials.

One of principal tasks whose solving is possible owing to use of the proposed MPS construction is the realization of the method of complex study of materials that consists in an allotment to investigator of the complex of possibilities to construct sample (fragment) of a given on MPS and to study it with techniques that are represented by such a MPS. The investigator will be able to obtain a maximal information on its objects. This becomes possible owing to the fact that the MPS construction proposed by this invention allows to study a concrete sample on practically any device/instrument.

Another task for what the proposed construction is convenient is the use of MPS for creation and transportation of a material (or its fragment) for subsequent placement and use it in any device/instrument as active or passive element. In such a manner MPS can be a stage with the fragment that represents an active element (e.g., transformer of one energy into another) and electrodes that represent fitted constituents of electronic circuits. For example, as a fragment of an active material placed on the surface of the stage of MPS can be biological crystal rhodopsin (that transforms the energy of photons into electric signal). Owing to an array of electrodes on MPS the transformed signal can be registered and treated by an analytic apparatus of the device/instrument. In this case the aggregate state of the protein that corresponds to a normal state (solid, liquid, or vapor) can be realized both on the MPS and in the device/instrument in which the MPS is fitted. This case is born in mind when the following terminology is used in this invention: a means for preservation of the fragments in an initial state. Finally, the MPS itself can represent a carrier on that microcircuits (as an analytical tool) or any transducers are placed. As an example of MPS with at least two fragments of different materials could be considered semiconductor structures with implementation of any junction between two zones with different kind of conductivities. This means that a beforehand-formed carrier (for example, a plate with analytical microchips, extended buses (electrodes) for transfer of signal, energy, data, relay device/instrument and other constituents) can, according to the terminology of this invention, be considered as MPS for realization of complex actions with the fragments (parts or samples) of the materials, from one side, and as a ready block or an independent device/instrument for realization of complex functions, on the other side. This, in particular, is kept in mind when it is saying in this invention that MPS can contain at least one electrode, and/or one analytical means, and/or at least one transforming means.

In the terminology of this invention the "stage" means a flat surface on which the fragment (part or sample) of the material can be placed. The stage, according to this invention, represents a thin film at least a part of which is implemented as a membrane. In this case the fragment or fragments of the materials can be placed on both surfaces of the stage. If the fragment is placed on one side (only at one surface), we name it "face-side" of membrane and the opposite side we name it "back-side" of membrane. Any available surface of the stage can serve as a surface for placement of the fragment of the sample.

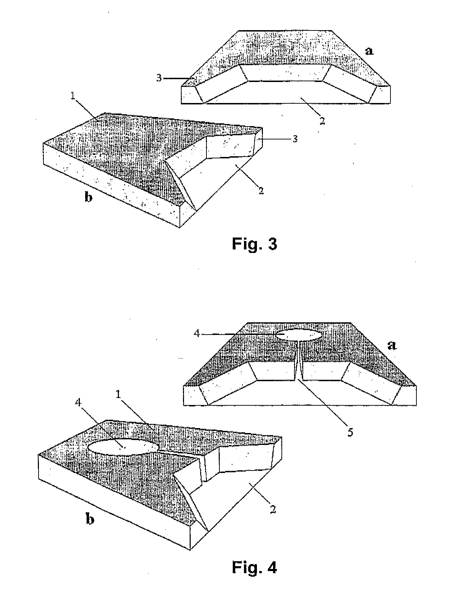

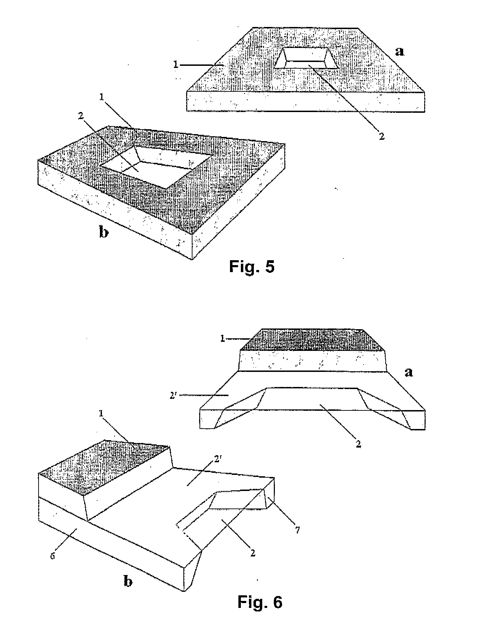

The membrane has a contact to (is strengthened with) the massive part of MPS. It is strengthened with at least by part of it's perimeter as it shown, for example, in Fig.4, or by whole perimeter as it shown, for example, in Fig.5. According to this invention, the membrane is a continuation of thin film of the stage that is freely hanging in a space. The thickness of the thin film can be of several nanometers to the thickness of stages that is used in classical studies of the samples.

In the terminology of this invention under the term "spatially dispersed device/instrument" are understood the device/instrument the whole of its main elements is not common. As examples of the elements are stages on that fragments of materials are placed or MPS with such fragments, a system that ensures their observation (vacuum-lock set, illumination), etc.

### Example 1

According to this invention, the most simple and accessible is the MPS construction (Fig. 3a,b) where the massive part 1 is implemented by semiconductor material silicon, and the stage is implemented as membrane 2 of silicon oxide. In order to maintain the strengthen characteristics of the membrane during the work (in the case of an elongated membrane) a possibility to realize corbels of stiffness 3 is envisaged in the construction.

Owing to possibility to use well-known material Si, in the construction it is easily can be realized additional technological constituents for their further application. In particular, in the body of the massive holder a means for formation of, at least, the fragment (sample or part) of the any material can be placed. In Fig. 4a,b is shown a cell-reservoir 4. In the cell, a solution of a material for study can be placed; through the ditch 5 such a solution can be evenly distributed over the surface of the membrane 2.

According to this invention, MPS can have the stage that is presented by the membrane 2. The stage is fasten to the massive part 1 on all the perimeter (Fig5 a,b). In a more general case, the stage is implemented as a thin film. A part of the film is presented by freely-hanging membrane 2 whereas another part is presented by a thin film 2' that is placed on the massive holder (Fig. 6a,b).

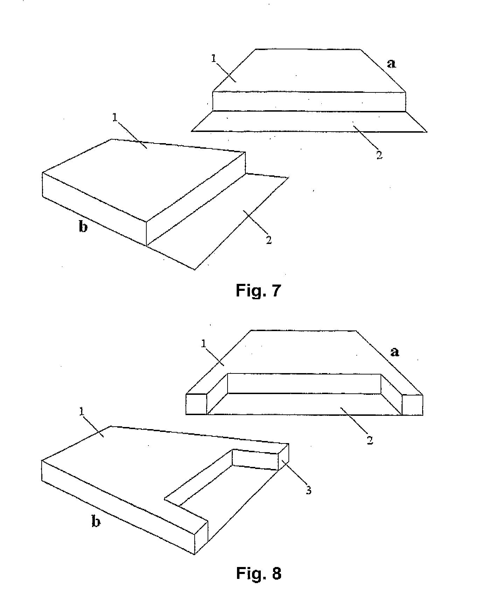

Other versions of the universal construction are shown in Fig. 7a,b and Fig. 8a,b. Here, the massive part is presented by glass plate 1, and layer of silicon nitride is used as the membrane. This material is more strong than silicon dioxide. Nevertheless, here the corbel of stiffness 3 is envisaged, too.

### Example 2

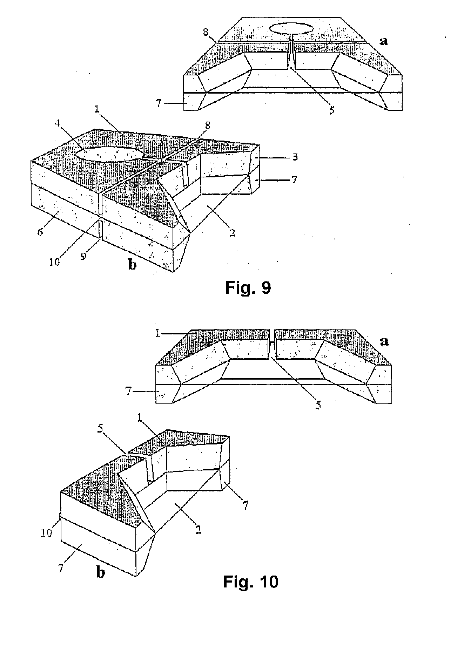

As it was noted above. MPS can contain constituents that are necessary for formation of the fragment of the material. In order, from one side, to provide a convenience at the creation of the studied fragment on the membrane 2 (Fig. 9a,b) and, from another side, a convenience at the work on the research device/instrument, according to this invention after formation of the indicated fragment on the membrane 2, the user (researcher) of such an MPS at a some stage can remove the massive part with the cell 4 with the solution that became useless. For realization of such a version a construction is proposed that includes additional massive layer 6 with the corbels of stiffness 7 or without them. By means of special ditches 8 and 9 formed in the massive layers 1 and 6 at creation MPS it is easy to break off a constituent of the massive holder formed by the layers 1 and 6. As a result of the complex actions the user obtains the MPS construction shown in Fig. 10 a,b.

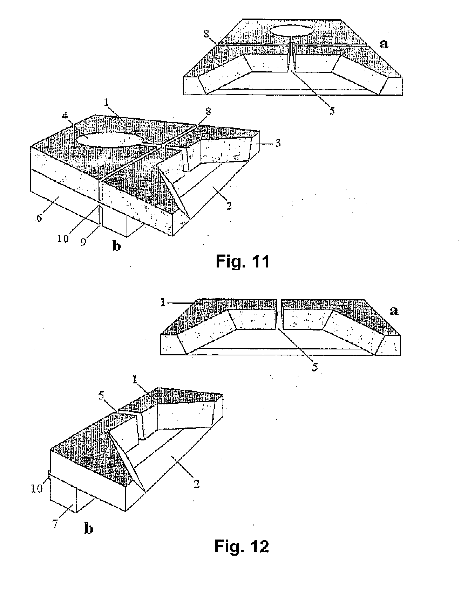

The membrane of the stage can be implemented of sapphire, diamond, diamond-like material, as well of any other material that is satisfied to the conditions that are necessary for performing the studies, namely be sufficiently thin (the same order as the sample, or thinner than it), transparent, has a smooth surface, be chemically inert, etc. Inorganic or organic compounds, amorphous or crystalline bodies can satisfy to these conditions. For realization of the indicated versions of the MPS construction a version of the construction is supposed in this invention where various materials, that ensure the preparation of the necessary thin film and the membrane in creation of the stage, are used as the layers 1 and 6 (Fig. 11a.b) and the massive holder. After formation of the fragment of the material, for implementation with it of the complex actions, the user obtains the MPS construction in the form shown in Fig. 12a,b.

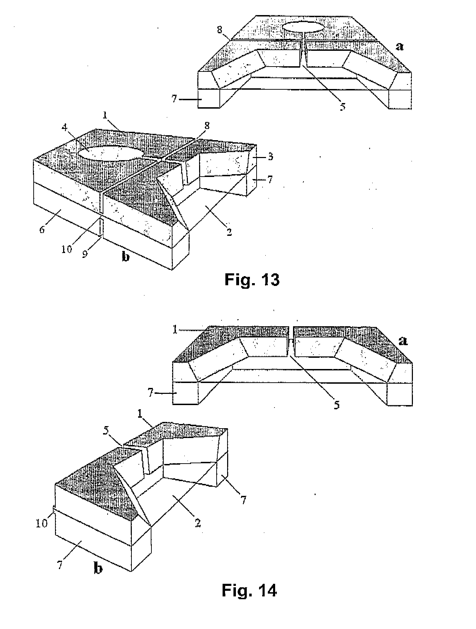

More strong versions of the constructions are shown in Fig. 13a,b, 14a,b, and 15a,b.

At choosing the membrane material an important role can play also the adaptability (for example, closeness by crystalline structure or surface structure) of the material formed to the MPS material (stage). For example, in studies of the structure and properties of thin films of GaN or GalnN best of all to choose sapphire (or, better - silicon carbide) for the membrane of the stage. In such a case, it is possible to realize the epitaxial "overgrowing" on the materials of thin layers GaN and GalnN - separately or one on another.

In the examples given the film of the stage is formed by either chemical joining of the substrate material with other chemical element or deposition on the surface of the holder. An oxide layer it is better to obtain by oxidation of the holder. Silicon nitride better to obtain by deposition on the surface of the holder. Silicon carbide can be obtained by the both techniques.

As it was noted above, one of the way to form material fragment as a thin film consists in using the ditch 5; owing to it the material fragment is formed from the initial ("nucleus") material placed in the cell 4. Such a fragment can be uniformly distributed (mechanically) along the surface of the membrane 2.

For other alms a device/instrument can be used that allows to arrange the holder 11 with MPS (Fig. 16) at an angle α to the horizon so that, in one case, the cell 4 with the initial material was arranged higher than the stage with the membrane 2, while in another case vice versa. The first case corresponds to a positive angle α while the second to a negative α. In the case of the positive value α a gravitational force acts to the initial material, the action results in a homogeneous spreading the initial material along the stage 2 via the ditch 5. By changing the angle α we can change the projection of the gravitational force on the direction of formation of the material fragment by increasing the result force, or decreasing it. This is an example of using the gravitational force as a means of directional formation of at least of one the material fragment. A more complex arrangement of MPS on the holder is possible: first, the plane of the stage is inclined to the horizon relative to one axis (a straight line that is a crossing of the holder plane with the horizon plane); then, all the system is inclined under an angle to the horizon relatively to any other axis. In such a manner, the device/instrument can contain more than one means for the controlled using the gravitational as a means for the controlled formation of at least one material fragment.

To these aims, a device/instrument that allows to rotate the holder 11. together with MPS (Fig. 17), for creation of "centrifugal forces" can be applied; in this case, the cell with the initial material can be both closer to the rotation center and further of it. Such a device/instrument, owing to the inertia, provides an analogue of the gravitational forces. In the case of gravitational forces, a variation of the projection of the forces on the direction of formation of the material fragment (accordingly, of the force acting to the material) is limited by the range of the angles α (minimum 0°, maximum 90°). In the case of rotation, the centrifugal forces depend on the angular rate w of the holder. The "inertial force" is, in fact, a part of the centripetal force (taken with the inverse sign) that is deficit for compensation of a displacement of the material in respect of MPS that takes place due to the inertia. As a result, the particles of the material are aspired to move off the rotation center and are actually move off the cell with the initial material being spread mechanically over the stage. By regulating the angular rate of rotation we change the value of the non-compensated part (=the value of the "inertial force"). For the object (= the initial material) the projection of the gravitational force to the direction of the formation of the fragment and the non-compensated part of the centripetal force taken with the reverse sign are identical, It is this similarity has allowed us to introduce the term "an analogue of the gravitational forces" in this invention. This case is an example where the analogue of the gravitational forces is used as a means for directional formation of at least one material fragment.

According to this invention, one of the means for formation of the fragment can be presented by a special relief (relief element), for example as a step that ensures favorable conditions for crystallographic growth of the material fragment in a necessary direction. For the crystallographic technique of creation of the material fragment both positive and negative angle α of the holder in respect to the horizon (Fig. 16) can be used for a change of growth conditions. Similarly, both the direct and the reverse mutual arrangements of the cell 4 and the stage 2 (Fig. 17) relative to the center of rotation of the holder will influence upon the creation of the material fragment at using the crystallographic technique.

The combination of the indicated means for the directional formation of the material fragment allows to ensure its creation in the shape of homogeneous thin film placed on the surface of the stage. In an ideal case, this will be a single-crystalline film, in an intermediate case this will be a polycrystalline film or, at least, a film with an impregnations of separate crystallites (crystalline clusters).

This invention supposes also a more complicated version for realization of means for directional formation of the material fragment. For example, at least one more rotation of the holder relative to an axis that does not coincide with the axis of the mentioned rotation is implemented simultaneously. Thus, the device/instrument can contain one, two or more controlling means for realization of the analogue of the gravitational forces as a means for the directional formation of at least one material fragment.

The material fragments in the shape of thin films can be deposited on the MPS stage by any known technique. For example, by the Langmuir-Blodgett technology [2-4]. Here, single layers and multilayers are prepared.

For the formation of the material fragments any known technologies can be used, too. Examples: electron-beam evaporation, resistive evaporation, microwave sputtering, chemical vapor deposition, atomic layer epitaxy, etc. in particular, a solvent (e.g., metallic solvent) can be used as the material fragment by means of what could be realize growth (formation) of necessary material or its fragment on MPS.

This is bearing in mind when it is said in this invention that at least one fragment of the material is formed with the possibility to implement the complex actions with at least one more fragment of this material and/or with at least one fragment of other material. The mentioned action of the gravitational forces or their analogue will be directed manly to the solvent (its mass), this will be promote to the directional formation (growth) of necessary fragment of another material.

### Example 3

The membrane 2 can have reflecting coating 12 from the face-side or back-side (Fig. 19 and Fig. 20). This means that at least one side of the membrane is implemented with conducting and partly or completely radiation-reflected coating. This is bearing in mind when it is said in this invention that at least one fragment of the material is formed with the possibility to implement the complex actions with at least one more fragment of this material and/or with at least one fragment of other material.

The wavelength of the radiation 13 and/or angle of incidence used for studies can be chosen so that the reflected from the sample 14 radiation 15. from the face side radiation 16, and/or from the back side radiation 17 giving give an interference picture 18. A broad radiation spectrum gives the synchrotron radiation (SR). Owing to the SR can be obtained beams having spectra from RF to hard X-ray. Let's compare the interference pictures 18 obtained as results of processes shown in Fig. 19 and 20. Analyzing them (by dividing in parts and adding some constituents), some new information can be obtained. In addition, the proposed technique can be unfold in time. This allows also to use the technique for an analysis of the processes that occur *in situ.* In such a manner, this invention propose an approach that allows to perform the analysis of the interference picture obtained with MPS based on the indicated technique. In other words, we have considered a specific version of the device/instrument that contains at least one means for action with MPS that maintains at least one means for action with material fragments, the utility containing a holder that allows to work with MPS; the MPS has a construction according to the description of this invention.

### Example 4

This invention proposes various techniques for preparation of MPS. Below, descriptions of principal stages of formation of MPS. The implementation of each the stage can consist of several standard and well-known lithographic and mechanical procedures (such as scribing side surfaces of MPS).

The below-given stages demonstrate principal steps in preparation of single MPS. According to this invention, the manufacturing of plurality of the MPS from a given silicon wafer is implemented by photolithographic multiplication and creation of a matrix of MPS. Separation of each the MPS from the mother plate is implemented by forming special ditches and cavities by photolithography and/or mechanical cutting. Then, by mechanic breaking that can be done by user himself the ready/prepared MPS is separated from the mother plate. The samples given allows to form a layer of the stage (in particular, membrane) as thin as possible: from thickness in several nanometers to hundreds and thousands of nanometers.

The stages of one of such techniques are given in Fig. 21a. Here, a thin film of a future stage is formed on the surface of the wafer (e.g., of silicon stage I). Then, the film is oxidized (silicon dioxide SiO₂ is formed - stage II). Finally, a part from the wafer is removed with the formation of the membrane from the silicon dioxide- stage III). The remained massive part of the wafer serves as a holder of MPS. At the stage of the forming the membrane, simultaneously with the membrane, a means for its use in the future formation of the sample (material fragment) can be created. The cell-reservoir 4 and ditch 5 shown in Fig. 4 serves as such a means.

Another version for forming the MPS is shown in Fig. 21b. The first massive material (for example, silicon wafer obtained at the stage I) is used for creation of thin-film layer of the future stage. This can be formation of silicon oxide (SiO₂), silicon nitride (Si₃N₄), or silicon carbide (SiC), or a variety of other materials. These parts of the substrate are necessary for solution of a variety of tasks intended for MPS. After the formation of the thin film (at the stage II), a second massive plate (stage III) is joined to the thin-film layer. This can be realized by bonding two silicon wafers at high temperature and large pressure with formation of composite plate. This can be realized also by sticking the wafers with some material-mediator, e.g., with an eutectics. Silicate or other glass can serve as the second layer. After the formation of such a layered structure a part of the second wafer is removed (stage IV). The remaining part of the second wafer - is a body of the future holder of the MPS. In conclusion, the first wafer is removed (stage V). The two procedures can be realized in a reverse order: first, the first wafer is removed and, then, the part of the second wafer is removed.

A third version for forming the MPS is shown in Fig. 21c. To one wafer (stage I) - a massive layer is joined (stage II) another massive wafer by any known and convenient (for the below-described procedures) technique. A part of one of the wafers is removed with remaining thin film of the material of the wafer (stage III). After that the second wafer is removed (stage IV).

One more technique for forming MPS is presented in Fig. 21d. In this case, a ready industrial composite (multilayered) wafer is used (stage I). In this case, three-layer wafer that consists of two massive silicon layers and an intermediate layer of silicon oxide is used. This is so-called structure SOI - silicon-on-insulator. This structure is broadly produced by industry. From one massive layer of such a wafer means for actions with the material-fragment arranged on the future MPS are formed (stage II). From the same layer it is possible to form corbels of stiffness. A part of the wafer is removed with the opening the intermediate oxide layer SiO₂ of the composite wafer. After that, similar actions can be implemented with second massive wafer (stage III). The result - forming the MPS. In conclusion (stage IV) In the both massive wafers technological ditches are formed for currying out the break for removal of a part of the massive holder of the formed MPS at any stage of the work of the user with it. In particular, after formation of the fragment of studied or used material.

Finally, one more particular case of the technique for preparation of MPS is shown in Fig. 21e. A massive wafer is used (stage I). A thin film (layer) of a future stage is formed on its surface (stage II). From the side of the formed film (layer) it is fastened to another wafer by any known and convenient technique (stage III). Then, similarly to the stages that were described in detail in the previous paragraph (beginning second one) the MPS. If the chosen wafers are of silicon, and the thin film (layer) is oxide one (prepared, e.g., by oxidation), and the bonding of the wafers is carried at high temperatures and pressures, this case is coincided with the previous.

### Example 5

Below, an example of the world park of scientific instruments that becomes easy-accessible owing to the MPS. If the MPS user studies a concrete experimental sample (CES) presented by a fragment of a concrete material placed on MPS performs a series of experiments with using of several tens of MPS and reaches a result, a necessity is to see this result in all the devices/instruments where the CES can be analyzed in respect to their structures and properties. MPS user itself can select such a sample in the combined device/instrument that is a result of the combination of NSOM with OM+AFM. However, for more detailed study of CES the most of researchers have not the set of scientific devices/instruments. As it is shown in this example, he can use the world park of scientific instruments. In such a manner, one of the problem is solved: if the researcher has obtained a CES in one of an instrument and wishes to study it in another analytical instrument, it is not necessary for him to try several ten attempts to reproduce the same sample on another substrate. He can take advantage with the CES on the MPS.

However, here is a task that has been solved never and by nobody due to its complexity. The task is to analyze the same point (a constituent important for the researcher) in the CES on spatially dispersed devices/instruments, with a precision/accuracy that is commensurable with the sizes of the objects studied. Macromolecules or clusters sized down to several nanometers can be such objects. The sizes of CES placed on the MPS can have tens of micrometers or millimeters that is thousands and millions times larger than the objects. And the distances between the "spatially dispersed instruments" can be from several centimeters to thousands kilometers. Thus, in order to obtain a versatile information about the same area (element) of the CES chosen it is important to provide the possibility for hit of the research instrument in a given spatial point with a given accuracy. To this aim, according to this invention, a special calibrated scale available for identification and use by all the principal scientific instruments is envisaged in the MPS proposed/considered in this invention. In particular, this is bearing in mind when it is said that the MPS contains at least one means for placement, and/or at least one means for positioning, and/or at least one means for fixation in the holder of a device/instrument, or of an instrument that contains at least one means for actions with fragments, the any means can be combined with another one.

Of coarse, such a scale can be insufficient for the precise "hit" into sought point of the CES. Then, the technique realized with the MPS construction, as well as with this invention, can come to the aid. It is bearing in mind the creation of a special mark or marks on the CES itself and/or on MPS, for example with the aid of a special scanning probe microscope with chemically modified tip. This is bearing in mind when it is said in this invention that at least one means for positioning of means of device/instrument that contains at least one means for the action with the fragments. And also this is bearing in mind when it is said in this invention that at least one electrode and/or at least one analytical means and/or at least one transforming means.

### Example 6

Let's consider a scheme how the method of action to the material fragments proposed by this invention can be used for the realization of the mechanism of collective use with world set of scientific instruments.

An investigator (user) in some laboratory by routine procedures on the MPS obtains a sample of a new material. He studies such a sample with the instrument he has. OM is a standard instrument. It is better if the OM is combined with AFM; even better if with NSOM, too. After he finds some characteristic features or properties that he planned to find, or discovered something interesting, he has a possibility to send his sample placed on the MPS to a spatially remote research center ("of collective use") that works with concrete complex techniques and devices/instruments completed with a qualified personnel and specialized in rendering service to foreign organizations. For example, with the source of synchrotron radiation (today, such sources are available only in 5 developed countries). The organizations can use such a service on a constant (long-term) or single basis. For sending the sample to the research the MPS must be inserted in a special container (approximate size 1x2x2 cm), sealed in an envelope mailed via post. Depending on the kind of the sample the container must satisfy to certain conditions; for inorganic sample - only hermetic, for organic (biological) sample - wet (nutrient) medium. In the research center a study of the sample is performed, and the information is written on corresponding carriers; all the data, together with the sample are sent to the user. A principal thing in this scheme - the universality of the MPS, its adaptation in holders of various devices/instruments. Thus, it is necessary that the construction of such a MPS would suitable, as a minimum, for the work in the most complex instrument - in the transmission electron microscope, i.e., would be placed in its holder. At this, the sample must be observable both "through" and "on a sliding regime to the surface of the fragment". The latter is important, e.g., for SR.

### Literature

1. Wen-Yen Hwang et al., US Patent 6,406,795. Jun. 18, 2002
2. AsylumResearch,
   http://www.asylumresearch.com/Applications/AfmFluo/AfmFluo.shtml
3. Langmuir I., J.Amer.Chem.Soc., 1917, 39, 1848
4. Blodgett K.B., J.Amer.Chem.Soc., 1935, 57, 1007-1022
5. Blinov L.M., Science Physics Successes, 1988, 155, 443

## Claims

1. A substrate for realization of complex actions with materials that includes
a massive part - holder,
a stage for fragments of materials,
at least one means for actions with the fragments,
wherein
the table represents a thin film at least one part of that is presented by a membrane,
the membrane consists of at least one material,
its both surfaces are free, and its attachment to the massive holder is implemented along at least part of its perimeter.

2. The substrate of claim 1 wherein the thin film is implemented of two or more materials.

3. The substrate of claim 2 wherein at least two of the materials differ one of other by their structure and/or by chemical composition.

4. The substrate of claim 1 wherein it contains at least one means for forming of at least one fragment that can be later removed at any stage and/or at least one means for maintenance of state of the fragments in an initial status.

5. The substrate of claim 4 wherein the means for formation of at least one fragment contains at least one relief element. (corresponding to P.7)

6. The substrate of claim 6 wherein at least one means for maintenance of the state of at least one fragment in the initial status can represent at least one thin film of another fragment of this material and/or of fragment of another material.

7. The substrate of claim 1 wherein it contains at least one means for placement and/or at least one means for positioning and/or at least one means for fixation in the holder of a device/instrument that contains at least one means for the action with fragments, with at least one of the mentioned means can be combined with another one

8. The substrate of claim 1 wherein it has at least one means for positioning of means of device/instrument that contains at least one means for the action with the fragments.

9. The substrate of claim 1 wherein it contains at least one electrode and/or at least one analytical means and/or at least one transforming means.

10. The substrate of claim 1 wherein it contains at least one means that ensures the possibility for placement it in/on transport container and/or in the holder of the device/instrument containing at least one means for the action with fragment.

11. The substrate of claim 10 wherein a transport container and/or the holder contain at least one means for maintenance of state of the fragments in the initial status.

12. The substrate of claim 1 wherein it has a design that allows to implement actions with the fragments at least on two spatially-spreaded equipments, each of the equipment containing at least one means for such an action and allows to reach the resolution that is sufficient for implementation of an action with the object that has sizes at least less than 100 nm.

13. The substrate of claim 1 wherein at least one formed on it fragment of material is used for realization of complex actions with at least one fragment of the material and/or with at least one fragment of another material.

14. The substrate of claim 1 wherein a coating exists on a front and/or back side of the membrane that ensures partial or full reflection of any radiation and/or is conductive one.

15. An equipment that includes
at least one means for action with the substrate,
at least one means for action with the fragments of materials
wherein
it contain a holder that allows to work with the substrate having the design in accordance with the claims 1 to 14.

16. A method for preparation of the substrate that consists
in preparation of the massive holder,
in preparation of the stage
wherein
the stage is implemented as thin film at least part of that is presented by a membrane,
its both surfaces are free, and its attachment to the massive holder is implemented
along at least part of its perimeter.

17. The method of claim 16 wherein a composite plate is used that contains at least two layers one of them being a massive layer.

18. The method of claim 16 wherein at least one step (phase) of formation of the stage and/or its removal is implemented after arrangement of some fragments of materials on at least a part of the stage.

19. A method for preparation of a material at least part of which contains a
crystalline structure
wherein
at least one means for controlled using gravitation forces and/or at least one controlled means for realization of analogue of the gravitation forces is used for directional formation of at least one fragment of material.

20. An equipment that includes
at least one means for action with the substrate,
at least one means for action with fragments of materials
wherein
it contains at least one means that ensures a directional crystallographic formation
of at least one fragment of material in the form of thin film.

21. The equipment of claim 20 wherein it contains at least one means for controlled using gravitation forces as a means for controlled formation of at least one fragment of material.

22. The equipment of claim 20 wherein it contains at least one controlled means for realization of an analogue of the gravitation forces as a means for directional formation of at least one fragment of material.

23. The equipment of any of claims 20-22 wherein it contains at least one means that allows to implement an action with the substrate that has the design according to claims 1 to 14.

24. The equipment of any of claims 20-22 wherein it contains at least one means for action with at least one substrate, the substrate can contain at least one electrode and/or at least one analytical means and/or at least one transforming means.
